# EUROPEAN PATENT APPLICATION

(11) **EP 4 773 401 A1**
(43) Date of publication of application: **08.07.2026**
(21) Application number: 24921384.4
(22) Date of filing: 21.08.2024
(51) Int. Cl.: H01M 50/507, H01M 50/526, H01M 50/519, H01M 50/59

(54) **BATTERY AND ELECTRIC DEVICE**

(30) Priority: 04.02.2024 CN 202420273548 U
(71) Applicant: Contemporary Amperex Technology Co., Limited, Ningde, Fujian 352100 (CN)
(72) Inventor: LONG, Chao, Ningde, Fujian 352100 (CN); CHEN, Xingdi, Ningde, Fujian 352100 (CN); ZHANG, Wenhui, Ningde, Fujian 352100 (CN); WANG, Peng, Ningde, Fujian 352100 (CN)
(74) Representative: Gong, Jinping
(86) International application number: PCT/CN2024/113668
(87) International publication number: WO 2025/161358

(57) **Abstract**

Provided are a battery (100) and an electric device. The battery (100) includes an insulation board (20), a circuit board (30), and a battery cell (10). The circuit board (30) is disposed on the insulation board (20). In a thickness direction (X) of the insulation board (20), the battery cell (10) is disposed on a side of the insulation board (20). An end of the battery cell (10) facing the insulation board (20) is provided with an electrode terminal (11). A busbar (40) is disposed on the insulation board (20); the busbar (40) includes a first connection layer (41), a second connection layer (42), and a first bent layer (43) connecting the first connection layer (41) and the second connection layer (42); the first connection layer (41) includes a main body region (411) and a connection region (412); the main body region (411) and the second connection layer (42) overlap in the thickness direction (X); the connection region (412) and the second connection layer (42) do not overlap in the thickness direction (X); the connection region (412) is connected to at least one of the electrode terminal (11), the insulation board (20), and the circuit board (30).

## Description

### CROSS-REFERENCE TO RELATED APPLICATION

The present application claims priority to Chinese Patent Application No. 202420273548.2, filed on February 04, 2024 and entitled "BATTERY AND ELECTRIC DEVICE", the content of which is incorporated herein by reference in its entirety.

### TECHNICAL FIELD

The present application relates to the technical field of batteries, and in particular, to a battery and an electric device.

### BACKGROUND

Battery cells are widely used in electronic devices, such as mobile phones, laptop computers, electric bicycles, electric vehicles, electric airplanes, electric ships, electric toy cars, electric toy ships, electric toy airplanes, and electric tools. Battery cells may include nickel-cadmium battery cells, nickel-hydrogen battery cells, lithium-ion battery cells, secondary alkaline zinc-manganese battery cells, etc.

In the development of battery technologies, how to improve the reliability of the battery has always been a research direction in the battery technologies.

### SUMMARY

In view of the above problems, the present application provides a battery and an electric device, so as to improve the reliability of the battery.

In a first aspect, embodiments of the present application provide a battery. The battery includes an insulation board, a circuit board, and a battery cell. The circuit board is disposed on the insulation board. The battery cell is disposed on a side of the insulation board in a thickness direction of the insulation board. An end of the battery cell facing the insulation board is provided with an electrode terminal. A busbar is disposed on the insulation board, the busbar includes a first connection layer, a second connection layer, and a first bent layer connecting the first connection layer and the second connection layer, the first connection layer includes a main body region and a connection region, the main body region and the second connection layer overlap in the thickness direction, the connection region and the second connection layer do not overlap in the thickness direction, and the connection region is connected to at least one of the electrode terminal, the insulation board, and the circuit board.

In the above solutions, the first connection layer and the second connection layer are disposed to improve the current passage capacity of the busbar, and the connection region of the first connection layer and the second connection layer do not overlap in the thickness direction, which can reduce the rigidity of the connection region of the busbar, so that the connection region of the busbar can be deformed along with the deformation of other components when the battery cell expands, thereby reducing the possibility of cracking or even disconnection at a joint between the busbar and other components, and improving the reliability of the battery.

In some embodiments, the second connection layer is provided with a clearance part that exposes the connection region.

In the above solution, the clearance part can reduce the thickness of the connection region, thereby reducing the rigidity of the busbar in the region, so that the connection region of the busbar can be deformed along with the deformation of other components when the battery cell expands, thereby reducing the possibility of cracking or even disconnection at the joint between the busbar and other components, and improving the reliability of the battery.

In some embodiments, the clearance part includes a through hole, and the manufacturing difficulty of the second connection layer can be reduced by penetrating through the second connection layer, thereby reducing the manufacturing difficulty of the busbar.

In some embodiments, the connection region includes a first connection part electrically connected to the electrode terminal, a second connection part connected to the insulation board, and a third connection part electrically connected to the circuit board. The clearance part includes a first clearance part, a second clearance part, and a third clearance part, and at least two of the first clearance part, the second clearance part, and the third clearance part are spaced apart from each other. The first connection part and the first clearance part are correspondingly disposed in the thickness direction, the second connection part and the second clearance part are correspondingly disposed in the thickness direction, and the third connection part and the third clearance part are correspondingly disposed in the thickness direction.

In the above solutions, the overall thickness of the busbar is increased as much as possible while reducing the rigidity of the connection region, thereby increasing the current passage capacity of the busbar and improving the charging efficiency of the battery.

In some embodiments, the first connection part includes a conductive connection part and a positioning hole, the positioning hole is disposed penetrating through the first connection part, and the conductive connection part is configured to be electrically connected to the electrode terminal.

In the above solutions, the manufacturing tolerance after the first connection part and the electrode terminal are fixedly connected is reduced, which is beneficial to reducing the tolerance dimension of the first connection part, and further increases the area of an overlapping region between the main body region and the second connection layer, thereby increasing the current passage capacity of the busbar.

In some embodiments, the second connection part is provided with a connecting hole, the insulation board is provided with a protruding part, at least part of the protruding part is disposed in the connecting hole, and the protruding part is riveted to the connecting hole.

In the above solutions, the busbar and the insulation board are fixedly connected by riveting, which can reduce the manufacturing difficulty, improve the connection reliability between the busbar and the insulation board, and reduce the possibility of separation between the busbar and the insulation board caused by vibration.

In some embodiments, a surface of the protruding part on a side facing away from the insulation board is not higher than a surface of the second connection layer on a side facing away from the first connection layer.

In the above solutions, it is beneficial to reducing the risk of interference between the protruding part and other components, and reducing the overall height after the insulation board is connected to the busbar, thereby reducing the height of the battery and improving the energy density of the battery.

In some embodiments, the battery further includes a connecting member, the third connection part is disposed in a protruding mode relative to the first connection part in a direction distal to the first connection layer, the third connection part is electrically connected to the circuit board through the connecting member, and the connecting member is disposed on a side of the third connection part facing the second connection layer.

In the above solutions, when the third connection part is fixedly connected to the connecting member, the battery cell may provide a supporting force for the third connection part, thereby improving the connection reliability between the third connection part and the connecting member.

In some embodiments, the busbar includes a bent region and two or more straight regions, the two or more straight regions are separately disposed on two sides of the bent region, the bent region is disposed protruding from the straight region in a direction distal to the first connection layer, and the first clearance part and the first connection part are disposed in the straight region.

In the above solutions, when the battery cell expands, the bent region may be deformed to reduce the tension caused by the straight region to the electrode terminal, thereby reducing the possibility of cracking at a joint between the first connection part and the electrode terminal in the straight region, and improving the reliability of the busbar.

In some embodiments, the second clearance part and the second connection part are disposed at least in the bent region.

In the above solution, the second connection part is disposed in the bent region, so that the position of the busbar on the insulation board is relatively fixed, thereby reducing the possibility that the relative position between the busbar and the insulation board changes when the battery cell contracts after expansion, and further reducing the possibility that the busbar is separated from the insulation board or even interferes with other components.

In some embodiments, a plurality of second connection layers are disposed, and the plurality of second connection layers are located on a same side of the first connection layer.

In the above solutions, the plurality of second connection layers are disposed, so that the thicknesses of the clearance part and the second connection layer are set more flexibly to increase the applicability of the busbar and reduce the manufacturing difficulty of the clearance part.

In some embodiments, the second connection layer is located on a side of the first connection layer facing away from the battery cell, thereby reducing the possibility of interference between the second connection layer and the electrode terminal.

In some embodiments, the main body region and the second connection layer are connected by a conductive adhesive or welding, which is beneficial to reducing the resistance of a contact surface between the main body region and the second connection layer, thereby improving the current passage capacity of the busbar, and reducing the possibility of separation between the first connection layer and the second connection layer.

In some embodiments, the busbar further includes a third connection layer and a second bent layer. One of the first connection layer and the second connection layer is connected to the third connection layer through the second bent layer, and the first connection layer, the second connection layer, and the third connection layer are stacked in the thickness direction. The connection region and the third connection layer do not overlap in the thickness direction.

In the above solutions, the current passage capacity is further improved, the charging speed of the battery is increased, and the possibility that due to a single connection layer being excessively thick, the bent layer is more difficult to bend or even impossible to bend is reduced.

In a second aspect, the embodiments of the present application provide an electric device, including the battery in any one of the above embodiments. The battery is configured to provide electric energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to an embodiment of the present application;
FIG. 2 is a schematic exploded structural diagram of a battery according to an embodiment of the present application;
FIG. 3 is a schematic structural diagram of a battery module according to an embodiment of the present application;
FIG. 4 is a schematic exploded structural diagram of another battery according to an embodiment of the present application;
FIG. 5 is a schematic structural diagram of a busbar according to an embodiment of the present application;
FIG. 6 is a schematic top structural diagram of a battery according to an embodiment of the present application;
FIG. 7 is a schematic structural cutaway diagram along A-A in FIG. 6;
FIG. 8 is an enlarged schematic structural diagram of R in FIG. 7;
FIG. 9 is an enlarged schematic structural diagram of Q in FIG. 6;
FIG. 10 is an enlarged schematic structural diagram of P in FIG. 4;
FIG. 11 is a schematic structural diagram of another busbar according to an embodiment of the present application;
FIG. 12 is a schematic structural diagram of yet another busbar according to an embodiment of the present application;
FIG. 13 is a schematic structural diagram of still another busbar according to an embodiment of the present application.

In the drawings:
1000: vehicle;
100: battery; 200: controller; 300: motor; 400: case; 410: first case part; 420: second case part; 430: accommodating part; 500: battery module;
10: battery cell; 11: electrode terminal; 20: insulation board; 21: protruding part; 211: main body part; 212: snap-fit part; 22: protruding structure;
30: circuit board;
40: busbar; 41: first connection layer; 411: main body region; 412: connection region; 4121: first connection part; 4121a: conductive connection part; 4121b: positioning hole; 4122: second connection part; 4122a: connecting hole; 4123: third connection part; 42: second connection layer; 421: clearance part; 4211: first clearance part; 4212: second clearance part; 4213: third clearance part; 43: first bent layer; 44: third connection layer; 45: second bent layer; 50: connecting member;
A1: straight region; A2: bent region;
X: thickness direction.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

In some embodiments, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

In some embodiments, functional components such as electrode terminals may be disposed on the shell. The electrode terminal may be configured to be electrically connected to the electrode assembly to output or input the electric energy of the battery cell.

As an example, the battery cell may be a cylindrical battery cell, a prismatic battery cell, a pouch battery cell, or a battery cell of other shapes. The prismatic battery cell includes a square-shell battery cell, a blade-shaped battery cell, and a multi-prismatic battery, and the multi-prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossmember and a longitudinal member of the vehicle.

In some embodiments, the battery may be an energy storage device. The energy storage device includes an energy storage container, an energy storage electrical cabinet, and the like.

At present, a plurality of battery cells of the battery are electrically connected through a plurality of busbars, and the current passage capacity of the busbar affects the charging speed of the battery. The greater the current passage capacity of the busbar, the higher the charging speed of the battery. The current passage capacity of the busbar is usually improved by increasing the width dimension or the thickness thereof, and the width dimension is affected by the width of the battery cell. If the width dimension of the busbar exceeds the width of the battery cell, the energy density may be reduced. However, increasing the thickness thereof not only increases the difficulty of connecting the busbar to other components, but also increases the rigidity of the busbar, resulting in cracking or even disconnection at a joint between the busbar and other components connected thereto when the battery cell expands, thereby reducing the reliability of the battery.

Based on the above technical problem, the present application provides a technical solution, which improves the current passage capacity of the busbar by disposing a first connection layer and a second connection layer. In addition, the connection region of the first connection layer and the second connection layer do not overlap in the thickness direction, which can reduce the rigidity of the connection region of the busbar, so that the connection region of the busbar can be deformed along with the deformation of other components when the battery cell expands, thereby reducing the possibility of cracking or even disconnection at the joint between the busbar and other components, and improving the reliability of the battery.

The technical solutions described in the embodiments of the present application are applicable to batteries and electric devices using batteries. The electric device is, e.g., a mobile phone, a portable device, a laptop computer, an electric bicycle, an electric vehicle, a ship, a spacecraft, an electric toy, or an electric tool. The spacecraft is, e.g., an airplane, a rocket, a space shuttle, or a spaceship. The electric toy includes, e.g., a stationary or mobile electric toy, specifically a game console, an electric car toy, an electric ship toy, and an electric airplane toy. The electric tool includes, e.g., a metal cutting electric tool, a grinding electric tool, an assembly electric tool, and a railway electric tool, specifically an electric drill, an electric grinder, an electric wrench, an electric screwdriver, an electric hammer, an impact drill, a concrete vibrator, or an electric planer.

The battery cell described in the embodiments of the present application is not limited to being applicable to the electric devices described above, but for the sake of brevity in description, the following embodiments are described by taking an electric vehicle as an example.

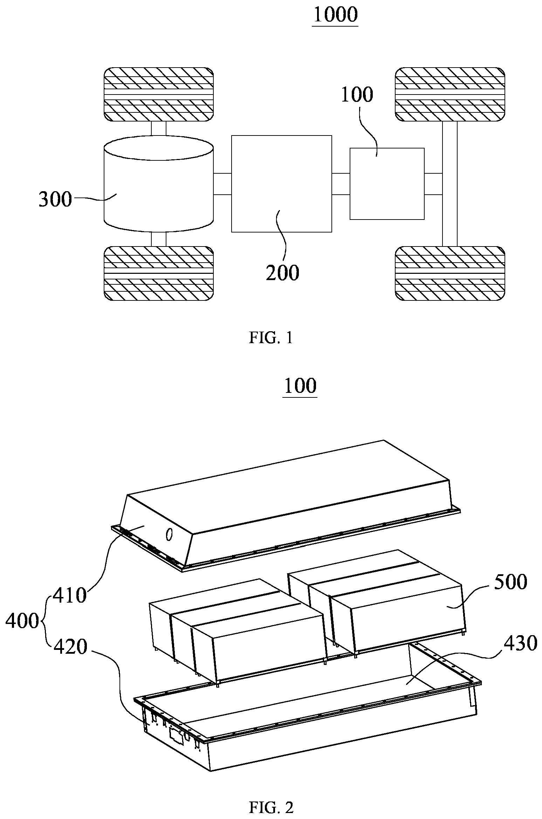

Referring to FIG. 1, FIG. 1 is a simple schematic diagram of a vehicle 1000 according to an embodiment of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 may be disposed inside the vehicle 1000. Specifically, for example, the battery 100 may be disposed at the bottom, the head, or the rear of the vehicle 1000. The battery 100 may be configured to power the vehicle 1000. For example, the battery 100 may serve as an operation power source for the vehicle 1000. The vehicle 1000 may further include a controller 200 and a motor 300. For example, the controller 200 is configured to control the battery to supply power to the motor 300. The battery may be configured for the starting, navigation, etc., of the vehicle 1000. Certainly, the battery 100 may also be configured to drive the vehicle 1000 to travel, replacing or partially replacing fuel or natural gas to provide driving power for the vehicle 1000.

FIG. 2 is an exploded schematic diagram of a battery according to some embodiments of the present application. As shown in FIG. 2, the battery 100 includes a case 400 and a battery cell (not shown in the figure). The battery cell is accommodated in the case 400.

The case 400 is configured to accommodate the battery cell, and the case 400 may be of various structures. In some embodiments, the case 400 may include a first case part 410 and a second case part 420. The first case part 410 and the second case part 420 are mutually lidded with each other, and the first case part 410 and the second case part 420 jointly define an accommodating part 430 for accommodating the battery cell. The second case part 420 may be of a hollow structure with one end open, the first case part 410 is of a plate-like structure, and the first case part 410 lids the open side of the second case part 420 to form the case having the accommodating part 430. The first case part 410 and the second case part 420 may each also be of a hollow structure with one side open, and the open side of the first case part 410 lids the open side of the second case part 420 to form the case 400 having the accommodating part 430. Certainly, the first case part 410 and the second case part 420 may be of various shapes, such as a cylindrical shape and a rectangular parallelepiped shape.

In the battery 100, one or a plurality of battery cells may be provided. If a plurality of battery cells are provided, the plurality of battery cells may be connected in series, in parallel, or in series-parallel. The series-parallel connection means that both series connection and parallel connection are present in the connection of the plurality of battery cells. The plurality of battery cells may be directly connected in series, in parallel, or in series-parallel, and then the whole formed by the plurality of battery cells is accommodated in the case 400. Certainly, the situation may be that the plurality of battery cells are first connected in series, in parallel, or in series-parallel to form battery modules 500, and then the plurality of battery modules 500 are connected in series, in parallel, or in series-parallel to form a whole and accommodated in the case 400.

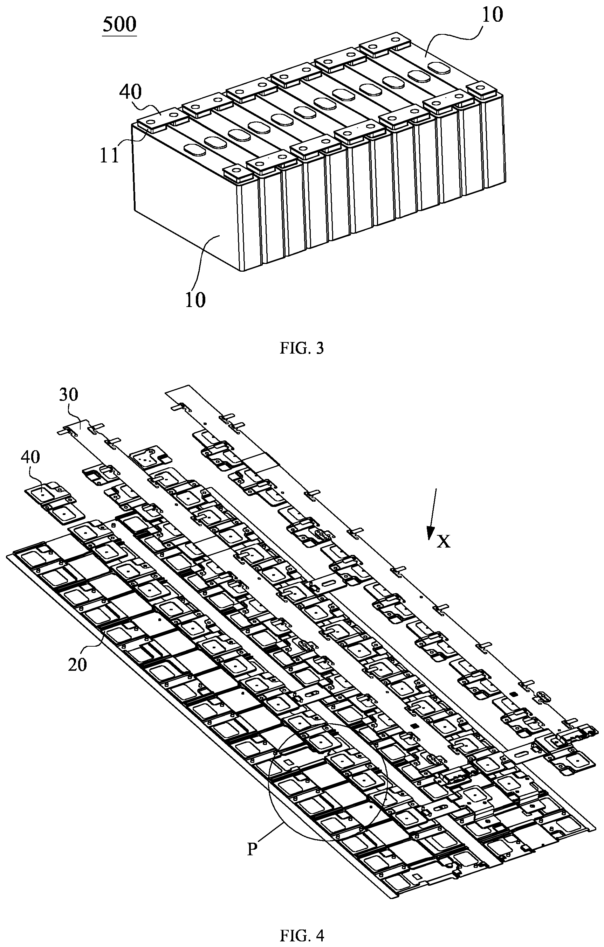

FIG. 3 is a schematic structural diagram of the battery module 500 shown in FIG. 2.

In some embodiments, as shown in FIG. 3, a plurality of battery cells 10 are provided, and the plurality of battery cells 10 are first connected in series, in parallel, or in series-parallel to form the battery module 500. The plurality of battery modules 500 are then connected in series, in parallel, or in series-parallel to form a whole and accommodated in the case. The plurality of battery cells 10 and the plurality of battery modules 500 in FIG. 3 are connected in series, in parallel, or in series-parallel through busbars 40. Certainly, an insulation board (not shown in the figure) and a circuit board (not shown in the figure) disposed on the insulation board are further disposed between the battery module 500 and the busbar 40.

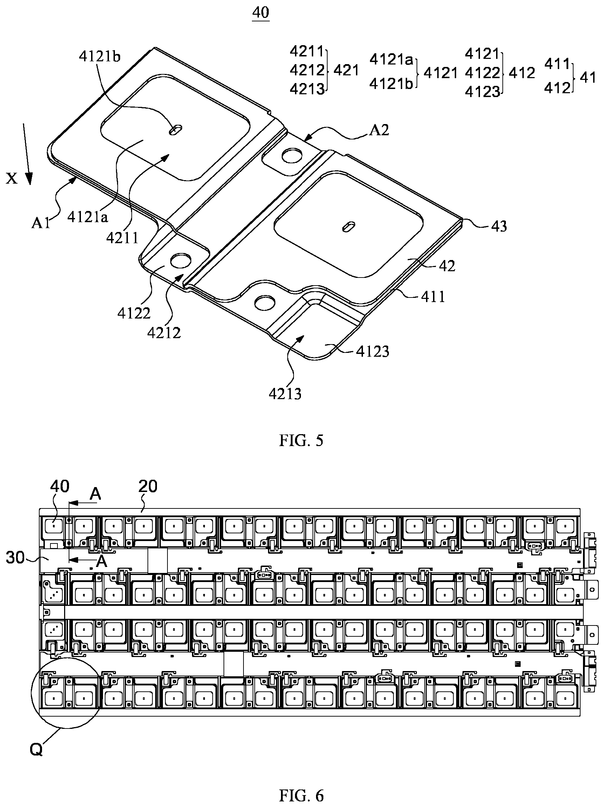

FIG. 4 is a schematic exploded structural diagram of another battery according to an embodiment of the present application. FIG. 5 is a schematic structural diagram of a busbar according to an embodiment of the present application. It should be noted that the battery cell is not shown in FIGs. 4 and 6.

Referring to FIGs. 3 to 5, the embodiments of the present application provide a battery. The battery includes insulation boards 20, circuit boards 30, and battery cells 10. The circuit board 30 is disposed on the insulation board 20. In a thickness direction X of the insulation board 20, the battery cell 10 is disposed on one side of the insulation board 20. An end of the battery cell 10 facing the insulation board 20 is provided with electrode terminals 11. The busbar 40 is disposed on the insulation board 20, the busbar 40 includes a first connection layer 41, a second connection layer 42, and a first bent layer 43 connecting the first connection layer 41 and the second connection layer 42, the first connection layer 41 includes a main body region 411 and a connection region 412, the main body region 411 and the second connection layer 42 overlap in the thickness direction X, the connection region 412 and the second connection layer 42 do not overlap in the thickness direction X, and the connection region 412 is connected to at least one of the electrode terminal 11, the insulation board 20, and the circuit board 30.

The battery cell 10 may be disposed on a side of the insulation board 20 in the thickness direction X, the insulation board 20 serves as a carrying component for the circuit board 30 and the busbar 40, and the insulation board 20 is provided with a via for exposing the electrode terminal 11, so that the busbar 40 can be electrically connected to the electrode terminal 11. The insulation board 20 may be provided with a recess, which can provide a space to accommodate at least part of the circuit board 30.

Optionally, the insulation board 20 may be made of an insulating material. Illustratively, the insulation board 20 is made of rubber or plastic.

Optionally, the circuit board 30 may collect operating parameters of the battery cell 10, such as voltage and temperature.

Optionally, the busbar 40 may be made of a conductive material. Illustratively, the busbar 40 may be made of a metal material, such as aluminum or copper.

Optionally, a plurality of busbars 40 may be disposed, and the plurality of busbars 40 may connect a plurality of battery cells 10 of the battery in series, in parallel, or in series-parallel.

As an example, taking the battery including a plurality of battery cells 10 and the plurality of battery cells 10 being arranged in series as an example, the battery cell 10 includes a positive electrode terminal 11 and a negative electrode terminal 11, and the positive electrode terminal 11 of one battery cell 10 of two adjacent battery cells 10 is electrically connected to the negative electrode terminal 11 of the other battery cell 10 through the busbar 40.

Optionally, the busbar 40 includes the first connection layer 41, the second connection layer 42, and the first bent layer 43. The surface of the first connection layer 41 and the surface of the second connection layer 42 may be attached to each other to increase the cross-sectional area of a partial region of the busbar 40, thereby increasing the current passage capacity of the busbar 40. Further, the surface of the main body region 411 and the surface of the second connection layer 42 may be attached to each other.

Optionally, the first connection layer 41, the second connection layer 42, and the first bent layer 43 may be of an integrated structure. Illustratively, the busbar 40 is of a plate-like structure in the manufacturing process, and is bent via a bending shaft, so that the first connection layer 41 is attached to the second connection layer 42.

In the embodiments of the present application, the connection region 412 on the first connection layer 41 may be configured to be connected to one or more of the electrode terminal 11, the insulation board 20, and the circuit board 30. Illustratively, the connection region 412 includes three regions, and each region is connected to a different component. For example, one region is connected to the electrode terminal 11, one region is connected to the insulation board 20, and one region is connected to the circuit board 30. Further, the three regions may be in communication to form a large region, or at least two of the three regions are spaced apart from each other through the main body region 411.

In the embodiments of the present application, the main body region 411 and the second connection layer 42 overlap in the thickness direction X, and the connection region 412 and the second connection layer 42 do not overlap in the thickness direction X. In other words, an overlapping region between the main body region 411 and the second connection layer 42 enables the overall thickness of the region of the busbar 40 to be greater than the overall thickness of the region where the connection region 412 and the second connection layer 42 do not overlap in the thickness direction X. It should be noted that "overlap" refers to an overlapping relationship between entities.

In the battery provided by the embodiments of the present application, the first connection layer 41 and the second connection layer 42 are disposed to improve the current passage capacity of the busbar 40, and the connection region 412 of the first connection layer 41 and the second connection layer 42 do not overlap in the thickness direction X, which can reduce the rigidity of the connection region 412 of the busbar 40, so that the connection region 412 of the busbar 40 can be deformed along with the deformation of other components when the battery cell expands, thereby reducing the possibility of cracking or even disconnection at a joint between the busbar 40 and other components, and improving the reliability of the battery.

In some optional embodiments, referring to FIG. 5, the second connection layer 42 is provided with a clearance part 421 that exposes the connection region 412.

Optionally, the projection area of the first connection layer 41 in the thickness direction X may be the sum of the projection area of the second connection layer 42 in the thickness direction X and the projection area of the clearance part 421 in the thickness direction X.

In these optional embodiments, the clearance part 421 can reduce the thickness of the connection region 412, thereby reducing the rigidity of the busbar 40 in the region, so that the connection region 412 of the busbar 40 can be deformed along with the deformation of other components when the battery cell expands, thereby reducing the possibility of cracking or even disconnection at the joint between the busbar 40 and other components, and improving the reliability of the battery.

In some optional embodiments, referring to FIG. 5, the clearance part 421 includes a through hole. In other words, the through hole may be formed in the second connection layer 42 to form the clearance part 421.

Optionally, the shape of the clearance part 421 may further include other shapes. Illustratively, the clearance part 421 may extend from the boundary of the second connection layer 42 in a first direction into the second connection layer 42, the clearance part 421 is disposed penetrating through the second connection layer 42, and the first direction intersects with the thickness direction X. For example, the projection shape of the clearance part 421 in the thickness direction X is a rectangle.

In these optional embodiments, the manufacturing difficulty of the second connection layer 42 can be reduced by penetrating through the second connection layer 42, thereby reducing the manufacturing difficulty of the busbar 40.

In some optional embodiments, referring to FIGs. 3 to 5, the connection region 412 includes a first connection part 4121 electrically connected to the electrode terminal 11, a second connection part 4122 connected to the insulation board 20, and a third connection part 4123 electrically connected to the circuit board 30. The clearance part 421 includes a first clearance part 4211, a second clearance part 4212, and a third clearance part 4213. At least two of the first clearance part 4211, the second clearance part 4212, and the third clearance part 4213 are spaced apart from each other. The first connection part 4121 and the first clearance part 4211 are correspondingly disposed in the thickness direction X, the second connection part 4122 and the second clearance part 4212 are correspondingly disposed in the thickness direction X, and the third connection part 4123 and the third clearance part 4213 are correspondingly disposed in the thickness direction X.

Optionally, the projection shape of the first connection part 4121 in the thickness direction X may match the projection shape of the electrode terminal 11 in the thickness direction X. For example, the projection shape of the electrode terminal 11 in the thickness direction X is a rectangle, and the projection shape of the first connection part 4121 in the thickness direction X is a rectangle. Optionally, the projection area of the first connection part 4121 in the thickness direction X may be greater than or equal to the projection area of the electrode terminal 11 in the thickness direction X.

Optionally, the second connection part 4122 and the insulation board 20 may be fixedly connected by snap-fitting, bolts, riveting, or the like.

Optionally, the first connection part 4121, the second connection part 4122, and the third connection part 4123 may be spaced apart from each other to reduce damage to other connection parts when different connection parts are connected to components connected thereto.

It should be noted that "corresponding arrangement of the connection part and the clearance part" refers to physical and spatial correspondence. As an example, the first connection part 4121 is exposed through the first clearance part 4211, the second connection part 4122 is exposed through the second clearance part 4212, and the third connection part 4123 is exposed through the third clearance part 4213. Optionally, the shapes of the first clearance part 4211, the second clearance part 4212, and the third clearance part 4213 may match the shapes of the connection parts corresponding thereto. Illustratively, the shape of the first connection part 4121 in the thickness direction X is a rectangle, and the shape of the first clearance part 4211 in the thickness direction X is a rectangle. Optionally, the projection area of the clearance part 421 may be greater than or equal to the projection area of the corresponding connection part. For example, the projection area of the first clearance part 4211 in the thickness direction X is greater than the projection area of the first connection part 4121 in the thickness direction X.

In some examples, the first clearance part 4211, the second clearance part 4212, and the third clearance part 4213 are spaced apart from each other. In some other examples, at least two of the first clearance part 4211, the second clearance part 4212, and the third clearance part 4213 are in communication to form one clearance part 421.

In these optional embodiments, the overall thickness of the busbar 40 is increased as much as possible while reducing the rigidity of the connection region 412, thereby increasing the current passage capacity of the busbar 40 and improving the charging efficiency of the battery.

In some optional embodiments, referring to FIGs. 3 and 5, the first connection part 4121 includes a conductive connection part 4121a and a positioning hole 4121b, the positioning hole 4121b is formed penetrating through the first connection part 4121, and the conductive connection part 4121a is configured to be electrically connected to the electrode terminal 11.

Optionally, the positioning hole 4121b may be formed at the geometric center of the first connection part 4121, and a mark may be disposed at the geometric center of the electrode terminal 11. The relative position between the first connection part 4121 and the electrode terminal 11 may be observed through the positioning hole 4121b, so as to reduce the manufacturing tolerance after the first connection part 4121 and the electrode terminal 11 are fixedly connected, which is beneficial to reducing the tolerance dimension of the first connection part 4121, and further increases the area of the overlapping region between the main body region 411 and the second connection layer 42, thereby increasing the current passage capacity of the busbar 40.

Optionally, the positioning hole 4121b includes one or more of a circular hole, a rectangular hole, a waist-shaped hole, or an elliptical hole.

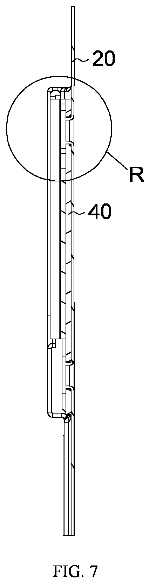

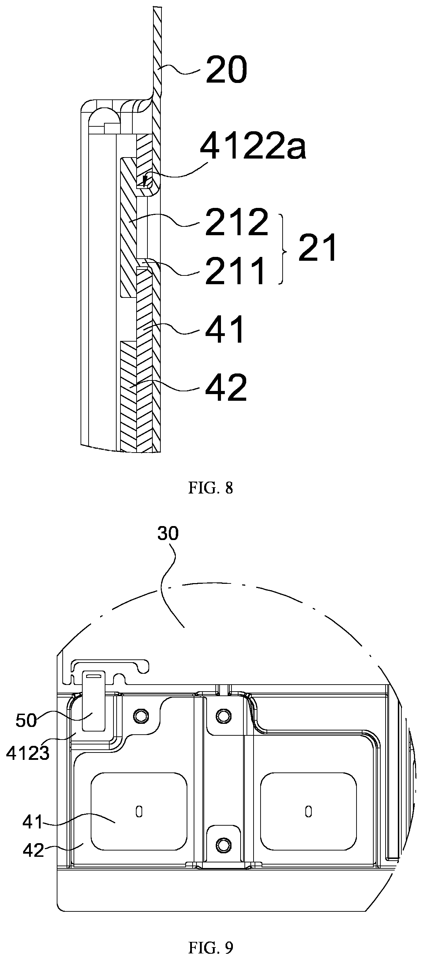

FIG. 6 is a schematic top structural diagram of a battery according to an embodiment of the present application. FIG. 7 is a schematic structural cutaway diagram along A-A in FIG. 6. FIG. 8 is an enlarged schematic structural diagram of R in FIG. 7.

In some optional embodiments, referring to FIGs. 6 to 8, the second connection part 4122 is provided with a connecting hole 4122a, the insulation board 20 is provided with a protruding part 21, at least part of the protruding part 21 is disposed in the connecting hole 4122a, and the protruding part 21 is riveted to the connecting hole 4122a.

In the process of connecting the insulation board 20 and the second connection part 4122, the protruding part 21 on the insulation board 20 may have a preset height, and part of the protruding part 21 passes through the connecting hole 4122a and exceeds the surface of the second connection part 4122 on a side facing away from the insulation board 20. By means of riveting, the part of the protruding part 21 is deformed to cover the surface of the second connection part 4122 on the side facing away from the insulation board 20, so as to realize the fixed connection between the insulation board 20 and the second connection part 4122.

Optionally, a plurality of connecting holes 4122a may be formed. As an example, a plurality of connecting holes 4122a are formed in one second connection part 4122. Alternatively, a plurality of second connection parts 4122 are disposed, the plurality of second connection parts 4122 are spaced apart from each other, and one or more connecting holes 4122a are formed in each second connection part 4122.

In these optional embodiments, the busbar 40 and the insulation board 20 are fixedly connected by riveting, which can reduce the manufacturing difficulty, improve the connection reliability between the busbar 40 and the insulation board 20, and reduce the possibility of separation between the busbar 40 and the insulation board 20 caused by vibration.

In some optional embodiments, referring to FIGs. 6 to 8, the surface of the protruding part 21 on a side facing away from the insulation board 20 is not higher than the surface of the second connection layer 42 on a side facing away from the first connection layer 41.

In some embodiments, the protruding part 21 includes a snap-fit part 212 and a main body part 211, the main body part 211 is located in the connecting hole 4122a, the snap-fit part 212 covers the surface of the first connection layer 41 on a side facing away from the insulation board 20, and the snap-fit part 212 is spaced apart from the second connection layer 42. The surface of the snap-fit part 212 on a side facing away from the insulation board 20 is not higher than the surface of the second connection layer 42 on a side facing away from the first connection layer 41, which is beneficial to reducing the risk of interference between the protruding part 21 and other components, and reducing the overall height after the insulation board 20 is connected to the busbar 40, thereby reducing the height of the battery and improving the energy density of the battery.

Optionally, the surface of the protruding part 21 on the side facing away from the insulation board 20 is flush with the surface of the second connection layer 42 on the side facing away from the first connection layer 41.

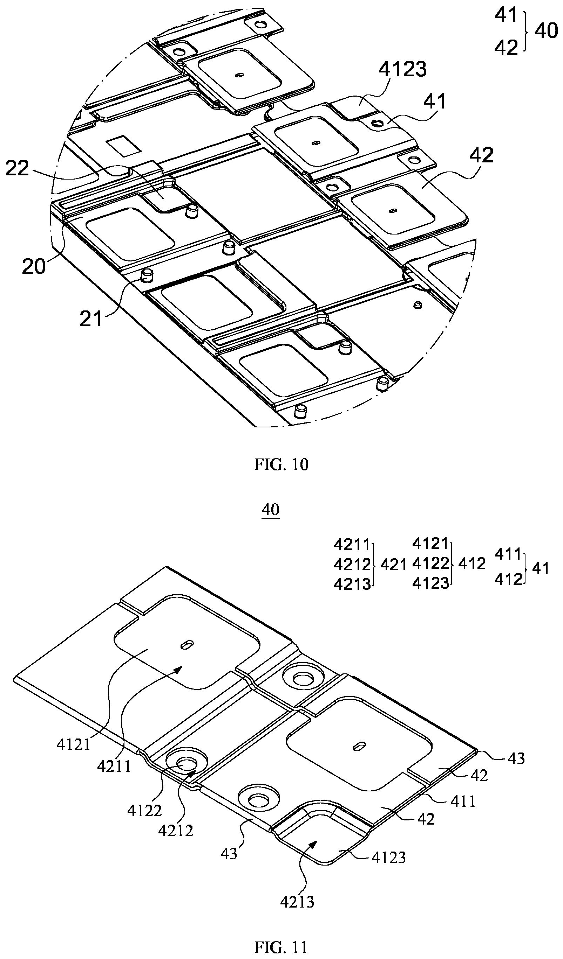

FIG. 9 is an enlarged schematic structural diagram of Q in FIG. 6. FIG. 10 is an enlarged schematic structural diagram of P in FIG. 4.

In some optional embodiments, referring to FIGs. 9 and 10, the battery further includes a connecting member 50, the third connection part 4123 is disposed in a protruding manner relative to the first connection part 4121 in a direction distal to the first connection layer 41, the third connection part 4123 is electrically connected to the circuit board 30 through the connecting member 50, and the connecting member 50 is disposed on a side of the third connection part 4123 facing the second connection layer 42.

Optionally, the connecting member 50 may be made of a conductive material, such as nickel.

The third connection part 4123 is disposed in a protruding manner relative to the first connection part 4121 in the direction distal to the first connection layer 41. Optionally, the third connection part 4123 is disposed protruding from the first connection part 4121 toward the direction of the battery cell. Optionally, the insulation board 20 may be provided with the same protruding structure 22, the protruding structure 22 protrudes from other regions of the insulation board 20 toward the direction of the battery cell, and the protruding structure 22 may abut against the shell of the battery cell.

Optionally, the third connection part 4123 and the connecting member 50 may be fixedly connected by welding.

Optionally, the surface of the connecting member 50 on a side facing away from the first connection layer 41 is not higher than the surface of the second connection layer 42 on the side facing away from the first connection layer 41, so as to reduce the dimension of the connecting member 50 in the height direction of the battery. Optionally, the surface of the connecting member 50 on the side facing away from the first connection layer 41 is flush with the surface of the second connection layer 42 on the side facing away from the first connection layer 41.

In these optional embodiments, when the third connection part 4123 is fixedly connected to the connecting member 50, the battery cell may provide a supporting force for the third connection part 4123, thereby improving the connection reliability between the third connection part 4123 and the connecting member 50.

In some optional embodiments, referring to FIG. 5, the busbar 40 includes a bent region A2 and two or more straight regions A1, the two or more straight regions A1 are separately disposed on two sides of the bent region A2, the bent region A2 is disposed protruding from the straight region A1 in a direction distal to the first connection layer 41, and the first clearance part 4211 and the first connection part 4121 are disposed in the straight region A1.

Optionally, one busbar 40 may connect two battery cells in series. As an example, each straight region A1 is provided with one first connection part 4121 to be connected to one battery cell.

The bent region A2 is disposed protruding from the straight region A1, that is, the bent region A2 protrudes toward the direction of the battery cell. It may be understood that the two or more straight regions A1 are on a first plane, the bent region A2 is on a second plane, and the straight region A1 and the bent region A2 may be connected through a transition arc.

Optionally, the rigidity of the bent region A2 may be less than the rigidity of the straight region A1.

In these optional embodiments, when the battery cell expands, the bent region A2 may be deformed to reduce the tension caused by the straight region A1 to the electrode terminal 11, thereby reducing the possibility of cracking at a joint between the first connection part 4121 and the electrode terminal 11 in the straight region A1, and improving the reliability of the busbar 40.

In some optional embodiments, referring to FIG. 5, the second clearance part 4212 and the second connection part 4122 are disposed at least in the bent region A2.

Optionally, the second connection part 4122 may be further disposed in the straight region A1. Correspondingly, the second clearance part 4212 is also disposed in the straight region A1.

In these optional embodiments, the second connection part 4122 is disposed in the bent region A2, so that the position of the busbar 40 on the insulation board 20 is relatively fixed, thereby reducing the possibility that the relative position between the busbar 40 and the insulation board 20 changes when the battery cell contracts after expansion, and further reducing the possibility that the busbar 40 is separated from the insulation board 20 or even interferes with other components.

FIG. 11 is a schematic structural diagram of another busbar according to an embodiment of the present application.

In some optional embodiments, referring to FIG. 11, a plurality of second connection layers 42 are disposed, and the plurality of second connection layers 42 are located on the same side of the first connection layer 41.

Optionally, the plurality of second connection layers 42 all overlap with the main body region 411 in the thickness direction X.

Optionally, a gap between the plurality of second connection layers 42 may form the clearance part 421. Illustratively, two second connection layers 42 each have an opening shape, and the opening shapes of the two second connection layers 42 are opposite to each other to form the first clearance part 4211.

Optionally, the shapes of the plurality of second connection layers 42 may be the same, or certainly, may be different.

Optionally, in the plurality of second connection layers 42, the clearance part 421 may be disposed on a part of the second connection layers 42, and the clearance part 421 is not disposed on the other part of the second connection layers 42.

Optionally, the thicknesses of the plurality of second connection layers 42 may be the same, or certainly, may be different.

Optionally, each second connection layer 42 is connected to the first connection layer 41 through the first bent layer 43.

As an example, a plurality of first bent layers 43 are disposed on one side of the first connection layer 41. Alternatively, the plurality of first bent layers 43 may also be disposed on different sides of the first connection layer 41. For example, the plurality of first bent layers are disposed on two opposite sides of the first connection layer 41 in the first direction, and the first direction intersects with the thickness direction X.

In these optional embodiments, the plurality of second connection layers 42 are disposed, so that the thicknesses of the clearance part 421 and the second connection layer 42 are set more flexibly to increase the applicability of the busbar 40 and reduce the manufacturing difficulty of the clearance part 421.

In some optional embodiments, the second connection layer 42 is located on a side of the first connection layer 41 facing away from the battery cell 10, thereby reducing the possibility of interference between the second connection layer 42 and the electrode terminal 11.

In some optional embodiments, the main body region 411 and the second connection layer 42 are connected by a conductive adhesive or welding, which is beneficial to reducing the resistance of a contact surface between the main body region 411 and the second connection layer 42, thereby improving the current passage capacity of the busbar 40, and reducing the possibility of separation between the first connection layer 41 and the second connection layer 42.

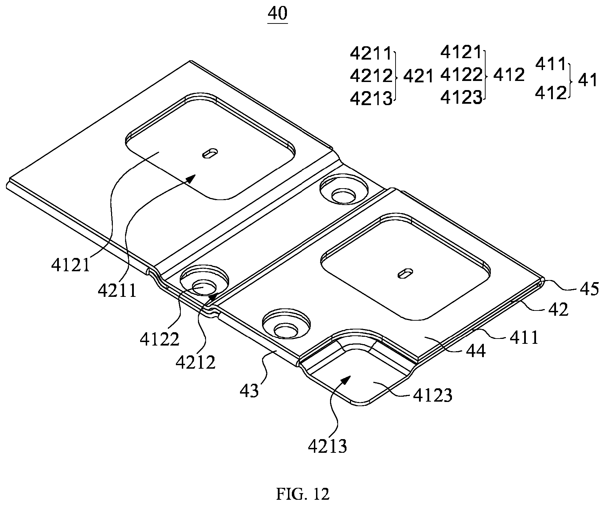

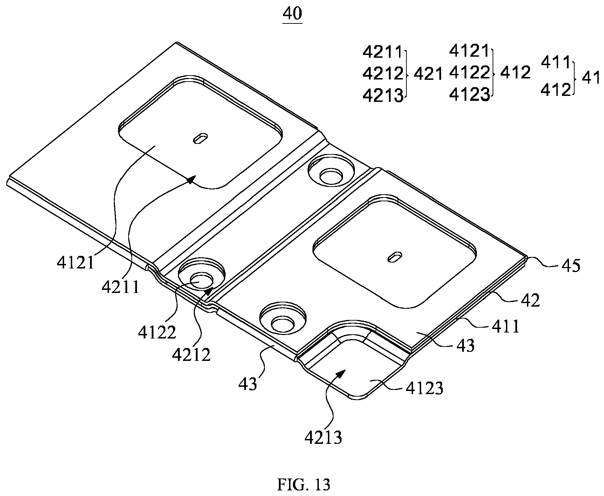

FIG. 12 is a schematic structural diagram of yet another busbar according to an embodiment of the present application. FIG. 13 is a schematic structural diagram of still another busbar according to an embodiment of the present application.

In some optional embodiments, referring to FIGs. 12 and 13, the busbar 40 further includes a third connection layer 44 and a second bent layer 45. One of the first connection layer 41 and the second connection layer 42 is connected to the third connection layer 44 through the second bent layer 45, and the first connection layer 41, the second connection layer 42, and the third connection layer 44 are stacked in the thickness direction X. The connection region 412 and the third connection layer 44 do not overlap in the thickness direction X.

In some examples, as shown in FIG. 12, the first connection layer 41 and the third connection layer 44 are connected through the second bent layer 45. In some other examples, as shown in FIG. 13, the second connection layer 42 and the third connection layer 44 are connected through the second bent layer 45.

Optionally, the first connection layer 41, the second connection layer 42, and the third connection layer 44 are sequentially stacked in the thickness direction X.

Optionally, the clearance part 421 on the second connection layer 42 is also disposed on the third connection layer 44. In other words, the shape of the second connection layer 42 is the same as the shape of the third connection layer 44.

Optionally, the busbar 40 may further include a fourth connection layer, a fifth connection layer, or more connection layers.

In these optional embodiments, the current passage capacity is further improved, the charging speed of the battery is increased, and the possibility that due to a single connection layer being excessively thick, the bent layer is more difficult to bend or even impossible to bend is reduced.

In a second aspect, the embodiments of the present application provide an electric device, including the battery in any one of the above embodiments. The battery is configured to provide electric energy.

It should be noted that the electric device according to the embodiments of the present application has the beneficial effects of the battery in any one of the above embodiments. For the specific content, reference may be made to the above description of the beneficial effects of the battery. Details are not described herein again in the embodiments of the present application.

According to some embodiments of the present application, referring to FIGs. 3 to 6 and 8 to 10, the battery includes the insulation board 20, the circuit board 30, the battery cell 10, and the busbar 40. The circuit board 30 is disposed on the insulation board 20. In a thickness direction X of the insulation board 20, the battery cell 10 is disposed on one side of the insulation board 20 in the thickness direction X, and an end of the battery cell 10 facing the insulation board 20 is provided with electrode terminals 11. The busbar 40 is disposed on the insulation board 20, the busbar 40 includes a first connection layer 41, a second connection layer 42, and a first bent layer 43 connecting the first connection layer 41 and the second connection layer 42, the first connection layer 41 includes a main body region 411 and a connection region 412, the main body region 411 and the second connection layer 42 overlap in the thickness direction X, the connection region 412 and the second connection layer 42 do not overlap in the thickness direction X, and the connection region 412 is connected to the electrode terminal 11, the insulation board 20, and the circuit board 30.

The second connection layer 42 is provided with a clearance part 421 that exposes the connection region, and the clearance part 421 includes a through hole. The clearance part 421 includes a first clearance part 4211, a second clearance part 4212, and a third clearance part 4213. The connection region 412 includes a first connection part 4121 electrically connected to the electrode terminal 11, a second connection part 4122 connected to the insulation board 20, and a third connection part 4123 electrically connected to the circuit board 30. The first connection part 4121 and the first clearance part 4211 are correspondingly disposed in the thickness direction X, the second connection part 4122 and the second clearance part 4212 are correspondingly disposed in the thickness direction X, and the third connection part 4123 and the third clearance part 4213 are correspondingly disposed in the thickness direction X. The first connection part 4121 includes a conductive connection part 4121a and a positioning hole 4121b, the positioning hole 4121b is formed penetrating through the first connection part 4121, and the conductive connection part 4121a is configured to be electrically connected to the electrode terminal 11. The second connection part 4122 is provided with a connecting hole 4122a, the insulation board 20 is provided with a protruding part 21, at least part of the protruding part 21 is disposed in the connecting hole 4122a, and the protruding part 21 is riveted to the connecting hole 4122a. The battery further includes a connecting member 50, the third connection part 4123 is disposed in a protruding manner relative to the first connection part 4121 in a direction distal to the first connection layer 41, the third connection part 4123 is electrically connected to the circuit board 30 through the connecting member 50, and the connecting member 50 is disposed on a side of the third connection part 4123 facing the second connection layer 42.

The busbar 40 includes a bent region A2 and two or more straight regions A1, the two or more straight regions A1 are separately disposed on two sides of the bent region A2, the bent region A2 is disposed protruding from the straight region A1 in a direction distal to the first connection layer 41, and the first clearance part 4211 and the first connection part 4121 are disposed in the straight region A1.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery, comprising:
an insulation board;
a circuit board, disposed on the insulation board;
a battery cell, wherein the battery cell is disposed on a side of the insulation board in a thickness direction of the insulation board, and an end of the battery cell facing the insulation board is provided with an electrode terminal; and
a busbar, disposed on the insulation board, wherein the busbar comprises a first connection layer, a second connection layer, and a first bent layer connecting the first connection layer and the second connection layer, the first connection layer comprises a main body region and a connection region, the main body region and the second connection layer overlap in the thickness direction, the connection region and the second connection layer do not overlap in the thickness direction, and the connection region is connected to at least one of the electrode terminal, the insulation board, and the circuit board.

2. The battery according to claim 1, wherein the second connection layer is provided with a clearance part that exposes the connection region.

3. The battery according to claim 2, wherein the clearance part comprises a through hole.

4. The battery according to claim 2, wherein the connection region comprises a first connection part electrically connected to the electrode terminal, a second connection part connected to the insulation board, and a third connection part electrically connected to the circuit board;
the clearance part comprises a first clearance part, a second clearance part, and a third clearance part, and at least two of the first clearance part, the second clearance part, and the third clearance part are spaced apart from each other,
wherein the first connection part and the first clearance part are correspondingly disposed in the thickness direction, the second connection part and the second clearance part are correspondingly disposed in the thickness direction, and the third connection part and the third clearance part are correspondingly disposed in the thickness direction.

5. The battery according to claim 4, wherein the first connection part comprises a conductive connection part and a positioning hole, the positioning hole is disposed penetrating through the first connection part, and the conductive connection part is configured to be electrically connected to the electrode terminal.

6. The battery according to claim 4, wherein the second connection part is provided with a connecting hole, the insulation board is provided with a protruding part, at least part of the protruding part is disposed in the connecting hole, and the protruding part is riveted to the connecting hole.

7. The battery according to claim 6, wherein a surface of the protruding part on a side facing away from the insulation board is not higher than a surface of the second connection layer on a side facing away from the first connection layer.

8. The battery according to claim 4, wherein the battery further comprises a connecting member, the third connection part is disposed in a protruding manner relative to the first connection part in a direction distal to the first connection layer, the third connection part is electrically connected to the circuit board through the connecting member, and the connecting member is disposed on a side of the third connection part facing the second connection layer.

9. The battery according to claim 4, wherein the busbar comprises a bent region and two or more straight regions, the two or more straight regions are separately disposed on two sides of the bent region, the bent region is disposed protruding from the straight region in a direction distal to the first connection layer, and the first clearance part and the first connection part are disposed in the straight region.

10. The battery according to claim 9, wherein the second clearance part and the second connection part are disposed at least in the bent region.

11. The battery according to any one of claims 1 to 10, wherein a plurality of second connection layers are disposed, and the plurality of second connection layers are located on a same side of the first connection layer.

12. The battery according to any one of claims 1 to 10, wherein the second connection layer is located on a side of the first connection layer facing away from the battery cell.

13. The battery according to any one of claims 1 to 10, wherein the main body region and the second connection layer are connected by a conductive adhesive or welding.

14. The battery according to any one of claims 1 to 10, wherein the busbar further comprises a third connection layer and a second bent layer, one of the first connection layer and the second connection layer is connected to the third connection layer through the second bent layer, and the first connection layer, the second connection layer, and the third connection layer are stacked in a thickness direction; the connection region and the third connection layer do not overlap in the thickness direction.

15. An electric device, comprising the battery according to any one of claims 1 to 14, wherein the battery is configured to provide electric energy.
